# FASCICULE DE BREVET EUROPEEN

(11) **EP 1 490 863 B1**
(45) Date de publication et mention de la délivrance du brevet: **19.09.2007**
(21) Numéro de dépôt: 03727600.3
(22) Date de dépôt: 20.03.2003
(51) Int. Cl.: G10L 15/28, G10L 15/14, G10L 15/18

(54) **PROCEDE DE RECONNAISSANCE DE PAROLE AU MOYEN D'UN TRANSDUCTEUR UNIQUE**
SPRACHERKENNUNGSVERFAHREN MIT EINEM EINZIGEN WANDLER
SPEECH RECOGNITION METHOD USING A SINGLE TRANSDUCER

(30) Priorité: 29.03.2002 FR 0204286
(43) Date de publication de la demande: 29.12.2004
(73) Titulaire: FRANCE TELECOM, 75015 Paris (FR)
(72) Inventeur: FERRIEUX, Alexandre, F-22560 Pleumeur Bodou (FR); DELPHIN-POULAT, Lionel, F-22560 Trebeurden (FR)
(74) Mandataire: Maillet, Alain
(86) Numéro de dépôt international: PCT/FR2003/000884
(87) Numéro de publication internationale: WO 2003/083832

(56) Documents cités:
- EP-A- 0 715 298
- RAMANUJAM J ET AL: "Address code and arithmetic optimizations for embedded systems" DESIGN AUTOMATION CONFERENCE, 2002. PROCEEDINGS OF ASP-DAC 2002. 7TH ASIA AND SOUTH PACIFIC AND THE 15TH INTERNATIONAL CONFERENCE ON VLSI DESIGN, 7 - 11 janvier 2002, pages 619-624, XP010588166 BANGALORE, INDIA, LOS ALAMITOS, CA, USA,IEEE COMPUT. SOC, US ISBN: 0-7695-1441-3

## Description

La présente invention concerne un procédé de traduction de données d'entrée en au moins une séquence lexicale de sortie, incluant une étape de décodage des données d'entrée au cours de laquelle des entités lexicales dont lesdites données sont représentatives sont identifiées au moyen d'au moins un modèle.

De tels procédés sont communément utilisés dans des applications de reconnaissance de parole, où au moins un modèle est mis en oeuvre pour reconnaître des informations présentes dans les données d'entrée, une information pouvant être constituée par exemple par un ensemble de vecteurs de paramètres d'un espace acoustique continu, ou encore par un label attribué à une entité sous-lexicale.

La demande de brevet EP 0715 298 divulgue un procédé de reconnaissance vocale qui inclut deux étapes distinctes de décodage qui sont respectivement opérées au moyen de modèles phonétiques et lexicaux. Au cours d'une étape, il est défini des frontières temporelles entre différents phonèmes et il est établi au cours d'une autre étape une liste de différents phonèmes identifiés comme pouvant être inclus au sein de chaque intervalle ainsi défini, avec des probabilités associées. Cette identification est faite par comparaison avec un modèle acoustique.

La publication de RAMANUJAN et AL intitulée « Address code and arithmetic optimization for embedded systems » DESIGN AUTOMATION CONFERENCE, 2002 divulgue une méthode permettant d'optimiser l'adressage d'une mémoire et en particulier de rationaliser les attributions d'adresses à de grands ensembles de données. Cette publication prévoit, après avoir observé que la plupart des données d'un même ensemble sont en général voisines les unes des autres lorsqu'elles sont stockées en mémoire, de déduire une nouvelle adresse scalaire d'une donnée d'un ensemble particulier à partir d'une adresse scalaire déjà connue d'une autre donnée appartenant à ce même ensemble, plutôt que de développer tout un nouveau processus de calcul semblable à celui qui a permis d'obtenir l'adresse déjà connue.

Dans certaines applications, le qualificatif "lexical" s'appliquera à une phrase considérée dans son ensemble, en tant que suite de mots, et les entités sous-lexicales seront alors des mots, alors que dans d'autres applications, le qualificatif "lexical" s'appliquera à un mot, et les entités sous-lexicales seront alors des phonèmes ou encore des syllabes aptes à former de tels mots, si ceux-ci sont de nature littérale, ou des chiffres, si les mots sont de nature numérique, c'est-à-dire des nombres.

Une première approche pour opérer une reconnaissance de parole consiste à utiliser un type particulier de modèle qui présente une topologie régulière et est destiné à apprendre toutes les variantes de prononciation de chaque entité lexicale, c'est-à-dire par exemple un mot, inclus dans le modèle. Selon cette première approche, les paramètres d'un ensemble de vecteurs acoustiques propre à chaque information qui est présente dans les données d'entrée et correspond à un mot inconnu doivent être comparés à des ensembles de paramètres acoustiques correspondant chacun à l'un des très nombreux symboles contenus dans le modèle, afin d'identifier un symbole modélisé auquel correspond le plus vraisemblablement cette information. Une telle approche garantit en théorie un fort taux de reconnaissance si le modèle utilisé est bien conçu, c'est-à-dire quasi-exhaustif, mais une telle quasi-exhaustivité ne peut être obtenue qu'au prix d'un long processus d'apprentissage du modèle, qui doit assimiler une énorme quantité de données représentatives de toutes les variantes de prononciation de chacun des mots inclus dans ce modèle. Cet apprentissage est en principe réalisé en faisant prononcer par un grand nombre de personnes tous les mots d'un vocabulaire donné, et à enregistrer toutes les variantes de prononciation de ces mots. Il apparaît clairement que la construction d'un modèle lexical quasi-exhaustif n'est pas envisageable en pratique pour des vocabulaires présentant une taille supérieure à quelques centaines de mots.

Une deuxième approche a été conçue dans le but de réduire le temps d'apprentissage nécessaire aux applications de reconnaissance de parole, réduction qui est essentielle à des applications de traduction sur de très grands vocabulaires pouvant contenir plusieurs centaines de milliers de mots, laquelle deuxième approche consiste à opérer une décomposition des entités lexicales en les considérant comme des assemblages d'entités sous-lexicales, à utiliser un modèle sous-lexical modélisant lesdites entités sous-lexicales en vue de permettre leur identification dans les données d'entrée, et un modèle d'articulation modélisant différentes combinaisons possibles de ces entités sous-lexicales.

Une telle approche, décrite par exemple au chapitre 16 du manuel "Automatic Speech and Speaker Recognition" édité par Kluwer Academic Publishers, permet de réduire considérablement, par rapport au modèle utilisé dans le cadre de la première approche décrite plus haut, les durées individuelles des processus d'apprentissage du modèle sous-lexical et du modèle d'articulation, car chacun de ces modèles présente une structure simple par rapport au modèle lexical utilisé dans la première approche.

Les modes de mise en oeuvre connus de cette deuxième approche font le plus souvent appel à un premier et à un deuxième transducteur, chacun formé par un modèle de Markov représentatif d'une certaine source de connaissances, c'est-à-dire, pour reprendre le cas de figure évoqué ci-dessus, un premier modèle de Markov représentatif des entités sous-lexicales et un deuxième modèle de Markov représentatif de combinaisons possibles desdites entités sous-lexicales. Au cours d'une étape de décodage de données d'entrée, des états contenus dans les premier et deuxième transducteurs, lesquels états sont respectivement représentatifs de modélisations possibles des entités sous-lexicales à identifier et de modélisations possibles de combinaisons desdites entités sous-lexicales, seront activés. Les état activés des premier et deuxième transducteurs seront alors mémorisés dans des moyens de mémorisation.

Selon une représentation conceptuelle élégante de cette deuxième approche, les premier et deuxième transducteurs peuvent être représentés sous la forme d'un transducteur unique équivalent aux premier et deuxième transducteurs pris dans leur composition, permettant de traduire les données d'entrée en entités lexicales, en exploitant simultanément le modèle sous-lexical et le modèle d'articulation.

Selon cette représentation conceptuelle, la mémorisation des états activés au cours de l'étape de décodage équivaut à une mémorisation d'états de ce transducteur unique, dont chaque état peut être considéré comme un couple formé par un état du premier transducteur formé par le premier modèle construit sur la base d'entités sous-lexicales, d'une part, et par un état du deuxième transducteur formé par le deuxième modèle construit sur la base d'entités lexicales, d'autre part. Une telle mémorisation pourrait être faite de manière anarchique, au fur et à mesure que ces états seront produits. Cependant, le nombre maximum d'états différents que peut prendre le transducteur unique est très grand, car il est égal à un produit entre les nombres maxima d'états que peuvent prendre chacun des premier et deuxième transducteurs. Par ailleurs, le nombre d'états du transducteur unique effectivement utiles pour le décodage, c'est-à-dire correspondant effectivement à des séquences sous-lexicales et lexicales autorisées dans la langue considérée, est relativement faible par rapport au nombre maximum d'états possibles, particulièrement si des états dont l'activation est peu probable, bien que théoriquement autorisée, sont exclus par convention. Ainsi, une mémorisation anarchique des états produits par le transducteur unique conduit à utiliser une mémoire de taille très importante, dans laquelle les informations représentatives des états produits seront très clairsemées, ce qui conduira à utiliser pour leur adressage à des fins de lecture et/ou d'écriture des nombres de grande taille nécessitant un système de gestion d'accès mémoire indûment complexe par rapport au volume d'informations utiles effectivement contenu dans la mémoire, qui induira des temps d'accès mémoire importants et incompatibles avec des contraintes temporelles propres par exemple à des applications de traduction en temps réel.

L'invention, telle que revendiquée dans les revendications 1 et 8, a pour but de remédier dans une large mesure à cet inconvénient, en proposant un procédé de traduction de données mettant en oeuvre un transducteur unique et des moyens de mémorisation destinés à contenir des informations relatives aux états activés dudit transducteur unique, procédé grâce auquel des accès en lecture/écriture aux dites informations peuvent être exécutés suffisamment rapidement pour autoriser une utilisation dudit procédé dans des applications de traduction en temps réel.

En effet, selon l'invention, un procédé de traduction de données d'entrée en au moins une séquence lexicale de sortie inclut une étape de décodage des données d'entrée au cours de laquelle des entités sous-lexicales dont lesdites données sont représentatives sont identifiées au moyen d'un premier modèle construit sur la base d'entités sous-lexicales prédéterminées, et au cours de laquelle sont générées, au fur et à mesure que les entités sous-lexicales sont identifiées et en référence à au moins un deuxième modèle construit sur la base d'entités lexicales, diverses combinaisons possibles desdites entités sous-lexicales, chaque combinaison étant destinée à être mémorisée, conjointement avec une valeur de vraisemblance associée, dans des moyens de mémorisation qui incluent une pluralité de zones mémoire dont chacune est apte à contenir au moins l'une desdites combinaisons, chaque zone étant munie d'une adresse égale à une valeur prise par une fonction scalaire prédéterminée lorsque ladite fonction est appliquée à des paramètres propres à des entités sous-lexicales et à leur combinaison destinées à être mémorisées ensemble dans la zone considérée.

L'utilisation de zones mémoire adressées au moyen d'une fonction scalaire prédéterminée permet d'organiser le stockage des informations utiles produites par ce transducteur unique et de simplifier la gestion des accès à ces informations puisque, conformément à l'invention, la mémoire est subdivisée en zones destinées chacune à contenir des informations relatives à des états effectivement produits par le transducteur unique. Ceci autorise un adressage desdites zones au moyen d'un nombre dont la taille est réduite par rapport à la taille nécessaire pour l'adressage d'une mémoire conçue pour mémoriser de manière anarchique n'importe quel couple d'états des premier et deuxième transducteurs.

Dans un mode de mise en oeuvre avantageux de l'invention, on choisira pour fonction scalaire prédéterminée une fonction essentiellement injective, c'est-à-dire une fonction, qui, appliquée à différents paramètres prendra sauf exception des valeurs différentes, ce qui permet d'assurer que chaque zone mémoire ne contiendra en principe que des informations relatives à au plus une seule combinaison d'entités sous-lexicales, c'est-à-dire à un seul état du transducteur équivalent, ce qui permet de simplifier encore les accès auxdites informations en supprimant la nécessité d'un tri, au sein d'une même zone mémoire, entre des informations relatives à différentes combinaisons d'entités sous-lexicales.

Dans une variante de ce mode de mise en oeuvre, la fonction scalaire prédéterminée sera en outre également essentiellement surjective en plus d'être injective, c'est-à-dire que chaque zone mémoire disponible est destinée à contenir effectivement, sauf exception, des informations relatives à une seule combinaison d'entités sous-lexicales, ce qui représente une utilisation optimale des moyens de mémorisation puisque leur potentiel de mémorisation sera alors pleinement exploité. Dans cette variante, la fonction scalaire prédéterminée sera en fait essentiellement bijective, en tant qu'à la fois essentiellement injective et surjective.

Les paramètres d'entrée de la fonction scalaire prédéterminée peuvent revêtir de multiples formes selon le mode de mise en oeuvre de l'invention choisi. Dans l'un de ces modes de mise en oeuvre, le modèle sous-lexical contient des modèles d'entités sous-lexicales dont différents états sont numérotés de façon contiguë et présentent un nombre total inférieur ou égal à un premier nombre prédéterminé propre au modèle sous-lexical, et le modèle d'articulation contient des modèles de combinaisons possibles d'entités sous-lexicales dont différents états sont numérotés de façon contiguë et présentent un nombre total inférieur ou égal à un deuxième nombre prédéterminé propre au modèle d'articulation, les numéros des états des entités sous-lexicales et de leurs combinaisons possibles constituant les paramètres auxquels la fonction scalaire prédéterminée est destinée à être appliquée.

La fonction scalaire prédéterminée peut revêtir de multiples formes selon le mode de mise en oeuvre de l'invention choisi. Dans un mode de mise en oeuvre particulier de l'invention, chaque valeur prise par la fonction scalaire prédéterminée est une concaténation d'un reste d'une première division entière par le premier nombre prédéterminé du numéro d'un état d'une entité sous-lexicale identifié au moyen du premier modèle et d'un reste d'une deuxième division entière par le deuxième nombre prédéterminé du numéro d'un état d'une combinaison identifié au moyen du deuxième modèle.

Une telle concaténation garantit en principe que les valeurs des restes des première et deuxième divisions entières seront utilisées sans altération aux fins de l'adressage des zones mémoire, entraînant ainsi une réduction maximale d'un risque d'erreur dans l'adressage.

Dans un mode de réalisation particulièrement avantageux de l'invention, en ce qu'il utilise des moyens éprouvés et individuellement connus de l'homme du métier, l'étape de décodage met en oeuvre un algorithme de Viterbi appliqué conjointement à un premier modèle de Markov présentant des états représentatifs de différentes modélisations possibles de chaque entité sous-lexicale autorisée dans une langue de traduction donnée, et à un deuxième modèle de Markov présentant des états représentatifs de différentes modélisations possibles de chaque articulation entre deux entités sous-lexicales autorisée dans ladite langue de traduction.

Sous un aspect général, l'invention concerne également un procédé de traduction de données d'entrée en une séquence lexicale de sortie, incluant une étape de décodage des données d'entrée destinée à être exécutée au moyen d'un algorithme du type algorithme de Viterbi, exploitant simultanément une pluralité de sources de connaissances distinctes formant un transducteur unique dont des états sont destinés à être mémorisés, conjointement avec une valeur de vraisemblance associée, dans des moyens de mémorisation qui incluent une pluralité de zones mémoire dont chacune est apte à contenir au moins l'un desdits états, chaque zone étant munie d'une adresse égale à une valeur prise par une fonction scalaire prédéterminée lorsque ladite fonction est appliquée à des paramètres propres aux états dudit transducteur unique.

L'invention concerne également un système de reconnaissance de signaux acoustiques mettant en oeuvre un procédé tel que décrit ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un schéma conceptuel décrivant un décodeur dans lequel un procédé conforme à l'invention est mis en oeuvre,
La Fig.2 est un schéma décrivant l'organisation d'une table destinée à mémoriser des informations produites par un tel décodeur,
La Fig.3 est un schéma fonctionnel décrivant un système de reconnaissance acoustique conforme à un mode de mise en oeuvre particulier de l'invention,
La Fig.4 est un schéma fonctionnel décrivant un premier décodeur destiné à exécuter au sein de ce système une première étape de décodage, et
La Fig.5 est un schéma fonctionnel décrivant un deuxième décodeur destiné à exécuter au sein de ce système une deuxième étape de décodage conforme au procédé selon l'invention.

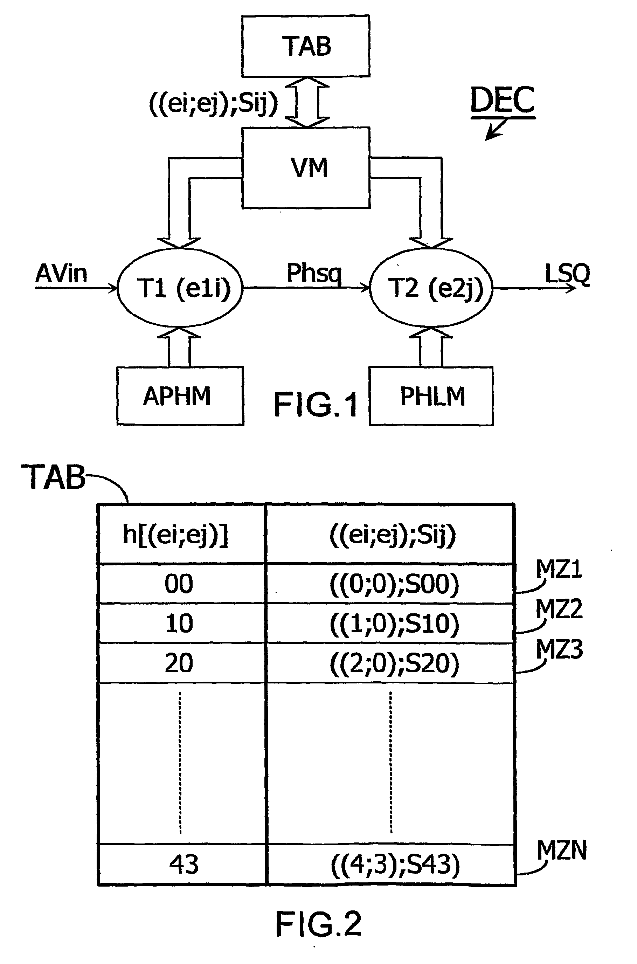

La Fig.1 représente un décodeur DEC destiné à recevoir des données d'entrée AVin et à délivrer une séquence lexicale de sortie LSQ. Ce décodeur DEC inclut une machine de Viterbi VM, destinée à exécuter un algorithme de Viterbi connu de l'homme du métier, laquelle machine de Viterbi VM utilise conjointement un premier modèle de Markov APHM représentatif de toutes les modélisations possibles de chaque entité sous-lexicale autorisée dans une langue de traduction donnée, et un deuxième modèle de Markov PHLM représentatif de toutes les modélisations possibles de chaque articulation entre deux entités sous-lexicales autorisée dans ladite langue de traduction, lesquels premier et deuxième modèles de Markov APHM et PHLM peuvent respectivement être représentés sous la forme d'un premier transducteur T1 destiné à convertir des séquences de vecteurs acoustiques en séquences d'entités sous-lexicales Phsq, par exemple des phonèmes, et sous la forme d'un deuxième transducteur T2 destiné à convertir ces séquences d'entités sous-lexicales Phsq en séquences lexicales LSQ, c'est-à-dire dans cet exemple en séquences de mots. Chaque transducteur T1 ou T2 peut être assimilé à un automate enrichi à états finis, chaque état ei ou ej correspondant respectivement à un état d'une entité sous-lexicale ou à un état d'une combinaison de telles entités identifiés par le premier ou deuxième transducteur T1 ou T2. Dans une telle représentation conceptuelle, le décodeur DEC est donc un transducteur unique, équivalent à une composition des premier et deuxième transducteurs T1 et T2, qui exploite simultanément le modèle sous-lexical et le modèle d'articulation et produit des états (ei;ej) dont chacun est un couple formé par un état ei du premier transducteur T1, d'une part, et par un état ej du deuxième transducteur T2, d'autre part, un état (ei;ej) étant par lui-même représentatif d'une combinaison possible d'entités sous-lexicales. Conformément à l'invention, chaque état (ei;ej) est destiné à être mémorisé, conjointement avec une valeur de vraisemblance Sij associée, dans des moyens de mémorisation, constitués dans cet exemple par une table TAB.

La Fig.2 représente schématiquement une table TAB, qui inclut une pluralité de zones mémoire MZ1, MZ2, MZ3...MZN, dont chacune est apte à contenir au moins l'un desdits états (e1i;e2j) du transducteur unique, accompagné de la valeur de vraisemblance Sij qui lui a été attribuée. Chaque zone MZ1, MZ2, MZ3...MZN est munie d'une adresse égale à une valeur prise par une fonction scalaire h prédéterminée lorsque ladite fonction est appliquée à des paramètres propres à des entités sous-lexicales et à leur combinaison destinée à être mémorisée dans la zone considérée.

Dans le mode de mise en oeuvre de l'invention décrit ici, la fonction scalaire h est une fonction essentiellement injective, c'est-à-dire une fonction qui, appliquée à différents paramètres prendra sauf exception des valeurs différentes, ce qui permet d'assurer que chaque zone mémoire MZm (pour m=1 à N) ne contiendra en principe que des informations relatives à au plus une seule combinaison d'entités sous-lexicales, c'est-à-dire à un seul état (ei;ej) du transducteur formé par le décodeur décrit ci-dessus. La fonction scalaire h est en outre également essentiellement surjective dans cet exemple, c'est-à-dire que chaque zone mémoire MZm (pour m=1 à N) est destinée à contenir effectivement, sauf exception, des informations relatives à un état (ei;ej) dudit transducteur. La fonction scalaire h est donc ici essentiellement bijective, en tant qu'à la fois essentiellement injective et essentiellement surjective. Lorsque le transducteur produira un nouvel état (ex;ey), il suffira, pour savoir si cette composition d'états des premier et deuxième transducteurs a déjà été produite, et avec quelle vraisemblance, d'interroger la table TAB au moyen de l'adresse h[(ex;ey)]. Si cette adresse correspond à une zone mémoire MZm déjà définie dans la table pour un état (ei;ej), une identité entre le nouvel état (ex;ey) et l'état (ei;ej) déjà mémorisé sera établie.

Dans ce mode de mise en oeuvre, le modèle sous-lexical contient différentes modélisations possibles ei de chaque entité sous-lexicale, numérotées de façon contiguë et présentant un nombre total inférieur ou égal à un premier nombre prédéterminé V1 propre au modèle sous-lexical, et le modèle d'articulation contient différentes modélisations possibles ej de possibles combinaisons de ces entités sous-lexicales, numérotées de façon contiguë et présentant un nombre total inférieur ou égal à un deuxième nombre prédéterminé V2 propre au modèle d'articulation, les numéros des entités sous-lexicales et de leurs combinaisons possibles constituant les paramètres auxquels la fonction scalaire h prédéterminée est destinée à être appliquée.

Chaque valeur prise par la fonction scalaire prédéterminée est une concaténation d'un reste, qui peut varier de 0 à (V1-1), d'une première division entière par le premier nombre prédéterminé V1 du numéro de la modélisation d' un état d'une entité sous-lexicale identifié au moyen du premier modèle et d'un reste, qui peut varier de 0 à (V2-1), d'une deuxième division entière par le deuxième nombre prédéterminé V2 du numéro de la modélisation d'un état d'une combinaison d'entités sous-lexicales identifié au moyen du deuxième modèle. Ainsi, si dans un exemple irréaliste car simplifié à l'extrême pour permettre une compréhension aisée de l'invention, les entités sous-lexicales modélisées dans le premier modèle de Markov sont trois phonèmes "p", "a" et "o", dont chacun peut être modélisé par cinq états distincts, c'est-à-dire des états (ei=0, 1, 2, 3 ou 4) pour le phonème "p", des états (ei=5, 6, 7, 8 ou 9) pour le phonème "a", et des états (ei=10, 11, 12, 13 ou 14) pour le phonème "o", le premier nombre prédéterminé V1 sera égal à 5.

Si les combinaisons d'entités sous-lexicales modélisées dans le deuxième modèle de Markov sont deux combinaisons "pa" et "po", dont chacune peut être modélisée par deux états distincts, c'est-à-dire des états (ej=0 ou 1) pour la combinaison "pa", et des états (ej=2 ou 3) pour la combinaison "po", le deuxième nombre prédéterminé sera égal à 4.

Les différentes modélisations possibles des entités sous-lexicales et de leurs combinaisons sont au maximum au nombre de N=20, l'adresse h[(0;0)] de la première zone mémoire MZ1 aura pour valeur la concaténation du reste de la division entière 0/V1=0 avec le reste de la division entière 0/V2=0 soit la concaténation 00 d'une valeur 0 avec une valeur 0. L'adresse h[(14;3)] de la Nème zone mémoire MZN aura pour valeur la concaténation du reste de la division entière de 14 par V1 (avec V1=5) avec le reste de la division entière de 3 par V2 (avec V2=4), soit la concaténation 43 d'une valeur 4 avec une valeur 3.

Une telle concaténation garantit en principe que les valeurs des restes des première et deuxième divisions entières seront utilisées sans altération aux fins de l'adressage des zones mémoire, entraînant ainsi une réduction maximale d'un risque d'erreur dans l'adressage. Cependant, une telle concaténation conduit à utiliser des nombres rendus artificiellement plus grands que nécessaire par rapport au nombre de zones mémoire N effectivement adressées. Des techniques, connues de l'homme du métier, permettent de comprimer des nombres à concaténer en limitant les pertes d'information liées à une telle compression. On pourra par exemple prévoir de faire se chevaucher des représentations binaires desdits nombres, en réalisant une opération OU-EXCLUSIF entre des bits de poids faible de l'un de ces nombres binaires avec les bits de poids fort de l'autre nombre binaire.

Afin de faciliter sa compréhension, la description de l'invention qui précède a été faite dans un exemple d'application où une machine de Viterbi opère sur un transducteur unique formé par une composition de deux modèles de Markov. Cette description est généralisable à des applications où une unique machine de Viterbi exploite simultanément un nombre P supérieur à 2 de sources de connaissances différentes, formant ainsi un transducteur unique destiné à produire des états (e1i;e2j;...;ePs), chacun desquels pouvant être mémorisé dans une zone mémoire d'une table, laquelle zone mémoire sera identifiée au moyen d'une adresse h[(e1i;e2j;...;ePs)] ou h est une fonction scalaire prédéterminée telle que décrite plus haut.

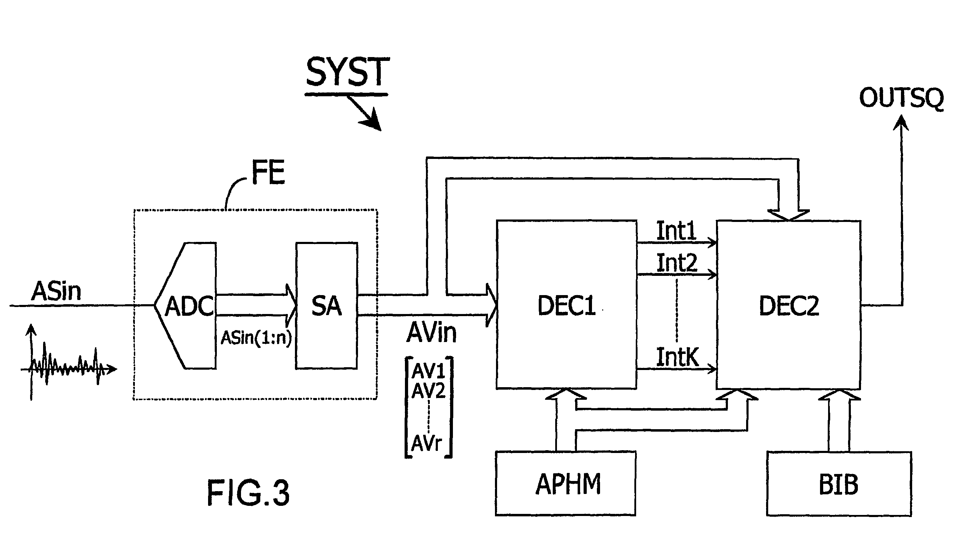

La Fig.3 représente schématiquement un système SYST de reconnaissance acoustique selon un mode de mise en oeuvre particulier de l'invention, destiné à traduire un signal acoustique d'entrée ASin en une séquence lexicale de sortie OUTSQ. Dans cet exemple, le signal d'entrée ASin est constitué par un signal électronique analogique, qui pourra provenir par exemple d'un microphone non représenté sur la figure. Dans le mode de réalisation décrit ici, le système SYST inclut un étage d'entrée FE, contenant un dispositif de conversion analogique/numérique ADC, destiné à fournir un signal numérique ASin(1:n), formé d'échantillons ASin(1), ASin(2)...ASin(n) codés chacun sur b bits, et représentatif du signal acoustique d'entrée ASin, et un module d'échantillonnage SA, destiné à convertir le signal acoustique numérisé ASin(1:n) en une séquence de vecteurs acoustiques AVin, chaque vecteur étant muni de composantes AV1, AV2...AVr où r est la dimension d'un espace acoustique défini pour une application donnée à laquelle le système de traduction SYST est destiné, chacune des composantes AVi (pour i=1 à r) étant évaluée en fonction de caractéristiques propres à cet espace acoustique. Dans d'autres modes de mise en oeuvre de l'invention, le signal d'entrée ASin pourra, dès l'origine, être de nature numérique, ce qui permettra de s'affranchir de la présence du dispositif de conversion analogique/numérique ADC au sein de l'étage d'entrée FE.

Le système SYST inclut en outre un premier décodeur DEC1, destiné à fournir une sélection Int1, Int2...IntK d'interprétations possibles de la séquence de vecteurs acoustiques AVin en référence à un modèle APHM construit sur la base d'entités sous-lexicales prédéterminées.

Le système SYST inclut de plus un deuxième décodeur DEC2 dans lequel un procédé de traduction conforme à l'invention est mis en oeuvre en vue d'analyser des données d'entrée constituées par les vecteurs acoustiques AVin en référence à un premier modèle construit sur la base d'entités sous-lexicales prédéterminées, par exemple extrait du modèle APHM, et en référence à un deuxième modèle construit sur la base de modélisations acoustiques provenant d'une bibliothèque BIB. Le deuxième décodeur DEC2 identifiera ainsi celle desdites interprétations Int1, Int2...IntK qui devra constituer la séquence lexicale de sortie OUTSQ.

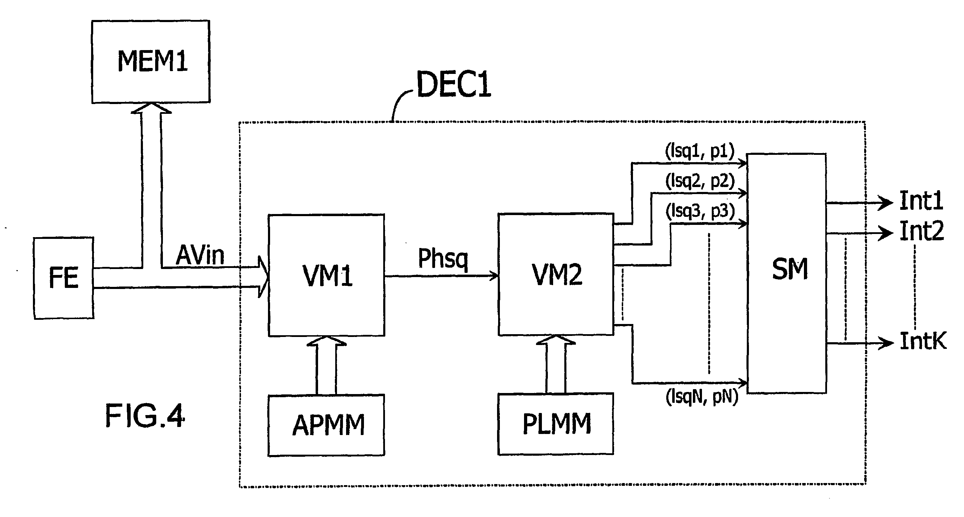

La fig.4 représente plus en détail le premier décodeur DEC1, qui inclut une première machine de Viterbi VM1, destinée à exécuter une première sous-étape de décodage de la séquence de vecteurs acoustiques AVin représentative du signal acoustique d'entrée et préalablement générée par l'étage d'entrée FE, laquelle séquence sera en outre avantageusement mémorisée dans une unité de stockage MEM1 pour des raisons qui apparaîtront dans la suite de l'exposé. La première sous-étape de décodage est opérée en référence à un modèle de Markov APMM autorisant en boucle toutes les entités sous-lexicales, de préférence tous les phonèmes de la langue dans laquelle le signal acoustique d'entée doit être traduit si l'on considère que les entités lexicales sont des mots, les entités sous-lexicales étant représentées sous forme de vecteurs acoustiques prédéterminés.

La première machine de Viterbi VM1 est apte à restituer une séquence de phonèmes Phsq qui constitue la plus proche traduction phonétique de la séquence de vecteurs acoustiques AVin. Les traitements ultérieurs réalisés par le premier décodeur DEC1 se feront ainsi au niveau phonétique, et non plus au niveau vectoriel, ce qui réduit considérablement la complexité desdits traitements, chaque vecteur étant une entité multidimensionnelle présentant r composantes, tandis qu'un phonème peut en principe être identifié par un label unidimensionnel qui lui est propre, comme par exemple un label "OU" attribué à une voyelle orale "u", ou un label "CH" attribué à une consonne frictive non-voisée "∫". La séquence de phonèmes Phsq générée par la première machine de Viterbi VM1 est ainsi constituée d'une succession de labels plus aisément manipulables que ne le seraient des vecteurs acoustiques.

Le premier décodeur DEC1 inclut une deuxième machine de Viterbi VM2 destinée à exécuter une deuxième sous-étape de décodage de la séquence de phonèmes Phsq générée par la première machine de Viterbi VM1. Cette deuxième étape de décodage est opérée en référence à un modèle de Markov PLMM constitué de transcriptions sous-lexicales d'entités lexicales, c'est-à-dire dans cet exemple de transcriptions phonétiques de mots présents dans le vocabulaire de la langue dans laquelle le signal acoustique d'entrée doit être traduit. La deuxième machine de Viterbi est destinée à interpréter la séquence de phonèmes Phsq, qui est fortement bruitée du fait que le modèle APMM utilisé par la première machine de Viterbi VM1 est d'une grande simplicité, et met en oeuvre des prédictions et des comparaisons entre des suites de labels de phonèmes contenus dans la séquence de phonèmes Phsq et diverses combinaisons possibles de labels de phonèmes prévues dans le modèle de Markov PLMM. Bien qu'une machine de Viterbi ne restitue usuellement que celle des séquences qui présente la plus grande probabilité, la deuxième machine de Viterbi VM2 mise en oeuvre ici restituera avantageusement toutes les séquences de phonèmes lsq1, lsq2...lsqN que ladite deuxième machine VM2 aura pu reconstituer, avec des valeurs de probabilité associées p1, p2...pN qui auront été calculées pour lesdites séquences et seront représentatives de la fiabilité des interprétations du signal acoustique que ces séquences représentent.

Toutes les interprétations possibles lsq1, lsq2...lsqN étant rendues automatiquement disponibles à l'issue de la deuxième sous-étape de décodage, une sélection opérée par un module de sélection SM des K interprétations Int1, Int2...IntK qui présentent les plus fortes valeurs de probabilité est aisée quelle que soit la valeur de K qui aura été choisie.

Les modèles de Markov APMM et PLMM peuvent être considérés comme des sous-ensembles du modèle APHM évoqué plus haut.

Les première et deuxième machines de Viterbi VM1 et VM2 peuvent fonctionner en parallèle, la première machine de Viterbi VM1 générant alors au fur et à mesure des labels de phonèmes qui seront immédiatement pris en compte par la deuxième machine de Viterbi VM2, ce qui permet de réduire le délai total perçu par un utilisateur du système nécessaire à la combinaison des première et deuxième sous-étapes de décodage en autorisant la mise en oeuvre de l'ensemble des ressources de calcul nécessaires au fonctionnement du premier décodeur DEC1 dès que les vecteurs acoustiques AVin représentatifs du signal acoustique d'entrée apparaissent, et non pas après qu'ils aient été entièrement traduits en une séquence complète de phonèmes Phsq par la première machine de Viterbi VM1.

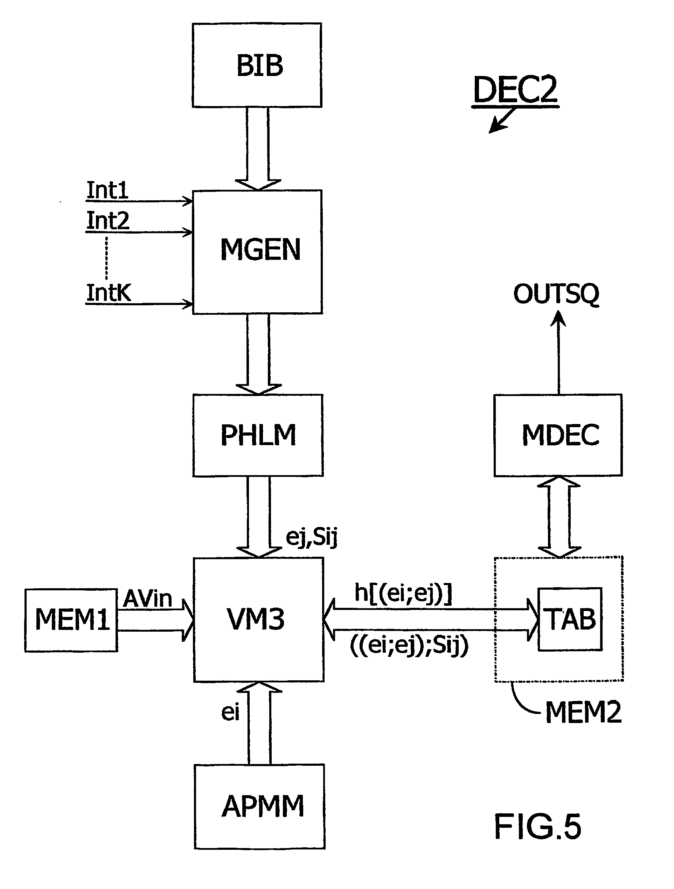

La Fig.5 représente plus en détail un deuxième décodeur DEC2 conforme à un mode de réalisation particulier de l'invention. Ce deuxième décodeur DEC2 inclut une troisième machine de Viterbi VM3 destinée à analyser la séquence de vecteurs acoustiques AVin représentative du signal acoustique d'entrée qui a été préalablement mémorisée à cet effet dans l'unité de stockage MEM1.

A cet effet, la troisième machine de Viterbi VM3 est destinée à identifier les entités sous-lexicales dont les vecteurs acoustiques A Vin sont représentatifs au moyen d'un premier modèle construit sur la base d'entités sous-lexicales prédéterminées, dans cet exemple le modèle de Markov APMM mis en oeuvre dans le premier décodeur et déjà décrit plus haut, et à produire des états eli représentatifs des entités sous-lexicales ainsi identifiées. Une telle exploitation du modèle de Markov APMM peut être représentée comme une mise en oeuvre d'un premier transducteur T1 semblable à celui décrit plus haut.

La troisième machine de Viterbi VM3 génère en outre, au fur et à mesure que des entités sous-lexicales sont identifiées et en référence à au moins un modèle de Markov spécifique PHLM construit sur la base d'entités lexicales, diverses combinaisons possibles des entités sous-lexicales, et à produire des états e2j représentatifs des combinaisons entités sous-lexicales ainsi générées, la combinaison la plus vraisemblable étant destinée à former la séquence lexicale de sortie OUTSQ. Une telle exploitation du modèle de Markov PHLM peut être représentée comme une mise en oeuvre d'un deuxième transducteur T2 semblable à celui décrit plus haut.

L'exploitation simultanée des modèles de Markov APMM et PHLM par la troisième machine de Viterbi VM3 peut donc être appréhendée comme l'utilisation d'un transducteur unique formé par une composition des premier et deuxième transducteurs tels ceux décrits plus haut, destiné à produire des états (ei;ej) munis chacun d'une valeur de vraisemblance Sij. Conformément à la description de l'invention qui précède, ces états seront mémorisés dans une table TAB incluse dans une unité de stockage MEM2, qui pourra former partie d'une mémoire centrale ou d'une mémoire cache incluant également l'unité de stockage MEM1, chaque état (ei;ej) étant stocké avec sa valeur de vraisemblance associée Sij dans une zone mémoire ayant pour adresse une valeur h[(ei;ej)], avec les avantages en termes de rapidité d'accès précédemment évoqués. Un décodeur de mémoire MDEC sélectionnera à l'issue du processus de décodage celle des combinaisons d'entités sous-lexicales mémorisées dans la table TAB qui présentera la plus grande vraisemblance, c'est-à-dire la plus grande valeur de Sij, destinée à former la séquence lexicale de sortie OUTSQ.

Le modèle de Markov spécifique PHLM est ici spécialement généré par un module de création de modèle MGEN, et est uniquement représentatif d'assemblages possibles de phonèmes au sein des séquences de mots formées par les diverses interprétations phonétiques Int1, Int2,...IntK du signal acoustique d'entrée délivrées par le premier décodeur, lesquels assemblages sont représentés par des modélisations acoustiques provenant d'une bibliothèque BIB des entités lexicales qui correspondent à ces interprétations. Le modèle de Markov spécifique PHLM présente donc une taille restreinte du fait de sa spécificité.

De la sorte, les accès aux unités de stockage MEM1 et MEM2, ainsi qu'au différents modèles de Markov utilisés dans l'exemple de mise en oeuvre de l'invention décrit ci-dessus nécessitent une gestion peu complexe, du fait de la simplicité de structure desdits modèles et du système d'adressage des informations destinées à être mémorisées et lues dans lesdites unités de stockage. Ces accès mémoire peuvent donc être exécutés suffisamment rapidement pour rendre le système décrit dans cet exemple apte à accomplir des traductions en temps réel de données d'entrée en séquences lexicales de sortie.

Bien que l'invention ait été décrite ici dans le cadre d'une application au sein d'un système incluant deux décodeurs disposés en cascade, il est tout-à-fait envisageable, dans d'autres modes de mise en oeuvre de l'invention, de n'utiliser qu'un unique décodeur semblable au deuxième décodeur décrit plus haut, qui pourra par exemple opérer une analyse acoustico-phonétique et mémoriser, au fur et à mesure que des phonèmes seront identifiés, diverses combinaisons possibles desdits phonèmes, la combinaison de phonèmes la plus vraisemblable étant destinée à former la séquence lexicale de sortie.

## Revendications

1. Procédé de traduction de données de parole en au moins une séquence lexicale de sortie, incluant une étape de décodage des données de parole au cours de laquelle des entités sous-lexicales dont lesdites données sont représentatives sont identifiées au moyen d'un premier modèle construit sur la base d'entités sous-lexicales prédéterminées, et au cours de laquelle sont générées, au fur et à mesure que les entités sous-lexicales sont identifiées et en référence à au moins un deuxième modèle construit sur la base d'entités lexicales, diverses combinaisons possibles desdites entités sous-lexicales, chaque combinaison étant destinée à être mémorisée, conjointement avec une valeur de vraisemblance associée, dans des moyens de mémorisation qui incluent une pluralité de zones mémoire dont chacune est apte à contenir au moins l'une desdites combinaisons, chaque zone étant munie d'une adresse égale à une valeur prise par une fonction scalaire prédéterminée lorsque ladite fonction est appliquée à des paramètres propres à des entités sous-lexicales et à leur combinaison destinées à être mémorisées ensemble dans la zone considérée.

2. Procédé de traduction selon la revendication 1, dans lequel la fonction scalaire prédéterminée est une fonction de nature injective.

3. Procédé de traduction selon la revendication 2, dans lequel la fonction scalaire prédéterminée est en outre également de nature surjective.

4. Procédé de traduction selon la revendication 1, dans lequel le modèle sous-lexical contient des modèles d'entités sous-lexicales dont différents états sont numérotés de façon contiguë et présentent un nombre total inférieur ou égal à un premier nombre prédéterminé propre au modèle sous-lexical, et dans lequel le modèle d'articulation contient des modèles de combinaisons possibles d'entités sous-lexicales dont différents états sont numérotés de façon contiguë et présentent un nombre total inférieur ou égal à un deuxième nombre prédéterminé propre au modèle d'articulation, les numéros des états des entités sous-lexicales et de leurs combinaisons possibles constituant les paramètres auxquels la fonction scalaire prédéterminée est destinée à être appliquée.

5. Procédé de traduction selon la revendication 4, dans lequel chaque valeur prise par la fonction scalaire prédéterminée est une concaténation d'un reste d'une première division entière par le premier nombre prédéterminé du numéro d'un état d'une entité sous-lexicale identifié au moyen du premier modèle et d'un reste d'une deuxième division entière par le deuxième nombre prédéterminé du numéro d'un état d'une combinaison identifié au moyen du deuxième modèle.

6. Procédé de traduction selon l'une des revendications 1 à 5, selon lequel l'étape de décodage met en oeuvre un algorithme de Viterbi appliqué conjointement à un premier modèle de Markov présentant des états représentatifs de différentes modélisations possibles de chaque entité sous-lexicale autorisée dans une langue de traduction donnée, et à un deuxième modèle de Markov présentant des états représentatifs de différentes modélisations possibles de chaque articulation entre deux entités sous-lexicales autorisée dans ladite langue de traduction.

7. Procédé de traduction de données de parole en une séquence lexicale de sortie, incluant une étape de décodage des données de parole destinée à être exécutée au moyen d'un algorithme du type algorithme de Viterbi, exploitant simultanément une pluralité de sources de connaissances distinctes formant un transducteur unique dont des états sont destinés à être mémorisés, conjointement avec une valeur de vraisemblance associée, dans des moyens de mémorisation qui incluent une pluralité de zones mémoire dont chacune est apte à contenir au moins l'un desdits états, chaque zone étant munie d'une adresse égale à une valeur prise par une fonction scalaire prédéterminée lorsque ladite fonction est appliquée à des paramètres propres aux états dudit transducteur unique.

8. Système de reconnaissance vocale comportant des moyens pour mettre en oeuvre un procédé de traduction conforme à l'une des revendications 1 à 7.

## Claims

1. Method of translating speech data into at least one output lexical sequence, including a step of decoding the speech data in the course of which sub-lexical entities of which said data are representative are identified by means of a first model constructed on the basis of predetermined sub-lexical entities, and in the course of which are generated, as and when the sub-lexical entities are identified and with reference to at least one second model constructed on the basis of lexical entities, various possible combinations of the said sub-lexical entities, each combination being intended to be stored, jointly with an associated likelihood value, in storage means which include a plurality of memory areas each of which is able to contain at least one of the said combinations, each area being furnished with an address equal to a value taken by a predetermined scalar function when the said function is applied to parameters specific to sub-lexical entities and to their combination which are intended to be stored together in the relevant area.

2. Translation method according to Claim 1, in which the predetermined scalar function is a function of an injective nature.

3. Translation method according to Claim 2, in which the predetermined scalar function is furthermore also of a surjective nature.

4. Translation method according to Claim 1, in which the sub-lexical model contains models of sub-lexical entities of which various states are numbered in a contiguous manner and exhibit a total number that is less than or equal to a first predetermined number specific to the sub-lexical model, and in which the articulation model contains models of possible combinations of sub-lexical entities of which various states are numbered in a contiguous manner and exhibit a total number that is less than or equal to a second predetermined number specific to the articulation model, the index numerals of the states of the sub-lexical entities and of their possible combinations constituting the parameters to which the predetermined scalar function is intended to be applied.

5. Translation method according to Claim 4, in which each value taken by the predetermined scalar function is a concatenation of a remainder of a first integer division by the first predetermined number of the index numeral of a state of a sub-lexical entity identified by means of the first model and of a remainder of a second integer division by the second predetermined number of the index numeral of a state of a combination, identified by means of the second model.

6. Translation method according to one of Claims 1 to 5, according to which the decoding step implements a Viterbi algorithm applied jointly to a first Markov model exhibiting states representative of various possible modellings of each sub-lexical entity permitted in a given translation language, and to a second Markov model exhibiting states representative of various possible modellings of each articulation between two sub-lexical entities that is permitted in the said translation language.

7. Method for translating speech data into an output lexical sequence, including a step of decoding the speech data that is intended to be executed by means of an algorithm of the Viterbi algorithm type, simultaneously utilizing a plurality of distinct knowledge sources forming a single transducer some of whose states are intended to be stored, jointly with an associated likelihood value, in storage means which include a plurality of memory areas each of which is able to contain at least one of the said states, each area being furnished with an address equal to a value taken by a predetermined scalar function when the said function is applied to parameters specific to the states of the said single transducer.

8. Voice recognition system comprising means for implementing a translation method in accordance with one of Claims 1 to 7.

## Patentansprüche

1. Verfahren zur Übersetzung von Sprachdaten in mindestens eine lexikalische Ausgangssequenz, das einen Schritt der Decodierung der Sprachdaten umfasst, während dem sublexikalische Einheiten, deren Daten repräsentativ sind, mittels eines ersten Modells identifiziert werden, das auf der Basis von vorbestimmten sublexikalischen Einheiten konstruiert wird, und während dem im Lauf der Identifizierung der sublexikalischen Einheiten und unter Bezug auf mindestens ein zweites Modell, das auf der Basis von lexikalischen Einheiten konstruiert ist, verschiedene mögliche Kombinationen der sublexikalischen Einheiten erzeugt werden, wobei jede Kombination dazu bestimmt ist, zusammen mit einem zugeordneten Likelihood-Wert in Speichermitteln gespeichert zu werden, die mehrere Speicherzonen umfassen, von denen jede geeignet ist, mindestens eine der Kombinationen zu enthalten, wobei jede Zone mit einer Adresse gleich einem Wert versehen ist, der von einer vorbestimmten skalaren Funktion angenommen wird, wenn die Funktion an Parameter, die für sublexikalische Einheiten spezifisch sind, und an ihre Kombination angewendet wird, die dazu bestimmt sind, zusammen in der betroffenen Zone gespeichert zu werden.

2. Übersetzungsverfahren nach Anspruch 1, bei dem die vorbestimmte skalare Funktion eine Funktion von injektiver Art ist.

3. Übersetzungsverfahren nach Anspruch 2, bei dem die vorbestimmte skalare Funktion außerdem von surjektiver Art ist.

4. Übersetzungsverfahren nach Anspruch 1, bei dem das sublexikalische Modell Modelle von sublexikalischen Einheiten enthält, von denen verschiedene Zustände aneinander angrenzend durchnummeriert sind und eine Gesamtzahl aufweisen, die kleiner als oder gleich einer ersten vorbestimmten Zahl ist, die für das sublexikalische Modell spezifisch ist, und bei dem das Verknüpfungsmodell Modelle von möglichen Kombinationen sublexikalischer Einheiten enthält, von denen verschiedene Zustände aneinander angrenzend durchnummeriert sind und eine Gesamtzahl aufweisen, die kleiner als oder gleich einer zweiten Zahl ist, die für das Verknüpfungsmodell spezifisch ist, wobei die Nummern der Zustände der sublexikalischen Einheiten und ihrer möglichen Kombinationen die Parameter bilden, an die die vorbestimmte skalare Funktion angewendet werden soll.

5. Übersetzungsverfahren nach Anspruch 4, bei dem jeder von der vorbestimmten skalaren Funktion angenommene Wert eine Verkettung eines Rests einer ersten Division mit Rest durch die erste vorbestimmte Zahl der Nummer eines Zustands einer sublexikalischen Einheit, die mittels des ersten Modells identifiziert wird, und eines Rests einer zweiten Division mit Rest durch die zweite vorbestimmte Zahl der Nummer eines Zustands einer Kombination ist, die mittels des zweiten Modells identifiziert wird.

6. Übersetzungsverfahren nach einem der Ansprüche 1 bis 5, gemäß dem der Schritt der Decodierung einen Viterbi-Algorithmus anwendet, der zusammen an ein erstes Markov-Modell, das repräsentative Zustände verschiedener möglicher Modellisierungen jeder autorisierten sublexikalischen Einheit in einer gegebenen Übersetzungssprache aufweist, und an ein zweites Markov-Modell angewendet wird, das repräsentative Zustände verschiedener möglicher Modellisierungen jeder Verknüpfung zwischen zwei autorisierten sublexikalischen Einheiten in der Übersetzungssprache aufweist.

7. Verfahren zur Übersetzung von Sprachdaten in eine lexikalische Ausgangssequenz, das einen Schritt der Decodierung der Sprachdaten umfasst, der mittels eines Algorithmus vom Typ Viterbi-Algorithmus ausgeführt werden soll, das gleichzeitig mehrere unterschiedliche Wissensquellen auswertet, die einen einzigen Transducer bilden, dessen Zustände zusammen mit einem zugeordneten Likelihood-Wert in Speichermitteln gespeichert werden sollen, die mehrere Speicherzonen umfassen, von denen jede geeignet ist, mindestens einen der Zustände zu enthalten, wobei jede Zone mit einer Adresse gleich einem Wert versehen ist, der von einer vorbestimmten skalaren Funktion angenommen wird, wenn die Funktion an Parameter angewendet wird, die für die Zustände des einzigen Transducers spezifisch sind.

8. Spracherkennungssystem, das Mittel aufweist, um ein Übersetzungsverfahren nach einem der Ansprüche 1 bis 7 anzuwenden.
